**Europäisches Patentamt**

**European Patent Office**

**Office européen des brevets**

(19)

(11) Veröffentlichungsnummer : **0 011 239**
**B2**

(12) **NEUE EUROPÄISCHE PATENTSCHRIFT**

(45) Veröffentlichungstag der neuen Patentschrift :
**15.03.89**

(21) Anmeldenummer : **79104385.4**

(22) Anmeldetag : **08.11.79**

(51) Int. Cl.⁴ : **E 01 F   8/00**, E 04 B   1/60,
E 04 B   1/86

(54) **Schallschutzwand.**

(30) Priorität : **09.11.78 DE 2848549**
**29.10.79 DE 2943615**

(43) Veröffentlichungstag der Anmeldung :
**28.05.80 Patentblatt 80/11**

(45) Bekanntmachung des Hinweises auf die Patenterteilung : **25.05.83 Patentblatt 83/21**

(45) Bekanntmachung des Hinweises auf die Entscheidung
über den Einspruch : **15.03.89 Patentblatt 89/11**

(84) Benannte Vertragsstaaten :
**AT BE CH DE FR GB NL**

(56) Entgegenhaltungen :
**CH--A--   420 556**
**CH--A--   455 210**
**DE--B-- 1 299 549**
**FR--A-- 1 444 422**
**FR--A-- 2 319 176**
**GB--A--   494 240**
**US--A-- 3 124 222**
**US--A-- 3 431 692**
**Katalog B77, 2. Auflage 4/78 der Fa. Halfeneisen,**
**Deckblatt und S. 30**

(73) Patentinhaber : **G + H MONTAGE GmbH**
**Westendstrasse 17**
**D-6700 Ludwigshafen (DE)**

(72) Erfinder : **Fellenberg, Horst**
**Pommernstrasse 1**
**D-6520 Worms-Weinsheim (DE)**
Erfinder : **Piehl, Bruno**
**Eicherpfad 12**
**D-6520 Worms 32 (DE)**

(74) Vertreter : **Kuhnen, Wacker & Partner**
**Schneggstrasse 3-5 Postfach 1553**
**D-8050 Freising (DE)**

EP 0 011 239 B2

**Beschreibung**

Die Erfindung betrifft eine Schallschutzwand mit einer Mehrzahl nebeneinander angeordneter, kastenförmiger Schallschutzelemente, nach dem Oberbegriff des Anspruchs 1.

Bei bekannten Schallschutzwänden dieser Art sind die Abdeckschienen an den seitlichen Längsstegen durch selbstschneidende Schrauben befestigt, wobei die Abdeckschienen zwischen den beiden im Bereich der Längsstege liegenden Reihen von Schrauben den Spalt zwischen den Längsstegen frei überbrücken. Dadurch ergibt sich der Nachteil, daß bei einer Demontage zunächst alle Teile genauestens gekennzeichnet werden müssen, damit bei der erneuten Montage der Teile die ursprüngliche Verbindung genau so wieder hergestellt werden kann, wie sie sich bei der Erstmontage ergeben hatte. In der Regel läßt sich nicht vermeiden, daß dennoch etwa neue Bohrungen für Schrauben hergestellt werden müssen, da die alten Schraubenlöcher nicht mehr exakt passen. Hierdurch fallen Bohrspäne an, welche die Montagearbeiten behindern und Reinigungsarbeiten erforderlich machen. Wenn einzelne Schallschutzelemente ausgetauscht werden sollen, so sind derartige spangebende Neubearbeitungen am ausgetauschten Element unvermeidlich.

Aus der US-A-3 431 692 ist ein Befestigungselement für eine Wandkonstruktion allgemeiner Art bekannt, welches mit einem im Spalt zwischen benachbarten Längsstegen der Wandelemente drehbaren Bolzen diesen Spalt durchgreift und mit einem durch den Spalt führbaren inneren Riegelkopf die Längsstege hintergreift. Dabei ist an der Sichtseite der Wand eine von außen her zugängliche Spanneinrichtung in Form einer Kopfschraube an jedem Befestigungselement vorgesehen, mit welcher der Längssteg zwischen dem Riegelkopf und der Abdeckschiene spannbar ist. Der Riegelkopf weist zwei Riegelarme auf, die eine gegenüber der Breite des zugeordneten Längssteges des jeweiligen Wandelements größere Länge aufweisen, so daß die Riegelarme bei Drehung des Riegelkopfes vor dem Erreichen eines Verdrehwinkels von 90° anschlagen und blockiert werden.

Zwar wären Befestigungselemente gemäß der US-A-3 431 692 bei einer gattungsgemäßen Schallschutzwand als Befestigungselemente anwendbar und sicherlich auch der gattungsgemäßen Verbindung zwischen den Schallschutzelementen überlegen. Jedoch sind die Riegelköpfe als Muttern der als Spanneinrichtung dienenden Schrauben ausgebildet, so daß durch Drehung des Schraubkopfes versucht werden muß, unter Reibungsmitnahme zwischen dem Außengewinde des Gewindeschaftes und der Gewindebohrung des Riegelkopfes letzteren hinter der Spaltebene so zu verdrehen, daß er aus der Fluchtrichtung mit dem Spalt in die Riegelstellung gerät. Daher muß zu Beginn der Montage an jedem Befestigungselement ganz vorsichtig und gefühlvoll gedreht werden, in der Hoffnung, daß der nicht mehr sichtbare Riegelkopf durch Reibung tatsächlich mitgenommen und mitgedreht wird und nicht etwa in seiner Parallellage zum Spalt verbleibt. Erst wenn der Widerstand am Riegelkopf gegen eine weitere Drehbewegung deutlich ansteigt, kann der Monteur vermuten, daß nun der Riegelkopf in der gewünschten Querstellung hinter den Längsstegen angedrückt ist und erst dann kann der Schraubenkopf ohne weitere Vorsichtsmaßnahmen bis zur Erzielung der gewünschten Klemmspannung weitergedreht werden. Es kann jedoch auch ohne weiteres der Fall auftreten, daß sich der nicht mehr sichtbare Riegelkopf gar nicht verdreht hat, etwa, weil er schon zu weit auf den Gewindeschaft aufgeschraubt war und daher an den Rändern des Spaltes hängen blieb, so daß zwar nach einigen Umdrehungen des Schraubkopfes der vom Monteur erwartete Anstieg des Gegenmoments am Schraubkopf auftritt, tatsächlich aber der Riegelkopf nicht die Längsstege einspannt, sondern unmittelbar an der Rückseite der Abdeckschiene im Spalt festgeklemmt wird. Dies ist von außen her nicht erkennbar, so daß durchaus der Fall auftreten kann, daß einige der vermeintlich montierten Befestigungselemente überhaupt nicht greifen, obwohl die Schraubköpfe ordnungsgemäß angezogen sind.

Da lediglich eine drehende Reibungsmitnahme des Riegelkopfes bei den Befestigungselementen der US-A-3 431 692 vorgesehen ist, gelangen die äußeren Stirnflächen des Riegelkopfes bei ihrem Anschlag auch nicht unter Druck. Sie können daher auch kein gegenseitiges axiales Verspannen der Wandelemente bewirken. Die Riegelköpfe sind dabei in Draufsicht rechteckförmig ausgebildet, so daß der seitliche Anschlag ohnehin nicht an der Stirnfläche, sondern an einer Kante der Stirnfläche erfolgt und somit ein Teil der an sich zur Verfügung stehenden Rückfläche des Längssteges für die Spannwirkung nicht genutzt wird.

Demgegenüber liegt der Erfindung die Aufgabe zugrunde, eine Schallschutzwand der im Oberbegriff des Anspruchs 1 angegebenen Gattung zu schaffen, deren Schallschutzelemente sich schnell und sicher unter gegenseitiger Verspannung montieren lassen.

Die Lösung dieser Aufgabe erfolgt durch die kennzeichnenden Merkmale des Anspruchs 1.

Dadurch, daß jeder Riegelkopf fest mit dem entsprechenden Bolzen verbunden ist, führt jede Drehbewegung des Bolzens sicher und formschlüssig zu einer entsprechenden Drehbewegung des Riegelkopfes. Als Spanneinrichtung dient eine Spannmutter, die unabhängig vom Bolzen auf dessen Gewindeabschnitt drehbar ist. Durch den Querschlitz im äußeren Ende des Bolzens läßt sich jeder Riegelkopf mittels eines Schraubenziehers od. dgl. schnell und sicher in seine Drehanschlagstellung drehen, in der er sauber an den Rückwänden der Längsstege anliegt und mit seinen konvex gekrümmten Stirnflächen eine gewisse axiale Spannkraft auf die benachbarten Schallschutzelemente aufbringt. Sodann kann etwa mittels eines Schnellschraubers eine ganze Reihe von zuvor mit ihren Riegelköpfen verdrehten Befestigungselementen angezogen werden, wobei die Gewindereibung der Spannmutter jeden Riegelkopf in seine Drehanschlagstellung mitzunehmen sucht und diese so beim Spannvorgang sichert. Das Festspannen der Riegelköpfe an den Rückseiten der Längsstege läßt sich abschließend mit einem Blick kontrollieren. Dadurch, daß die Riegelarme mit einer konvex gekrümmten Stirnfläche an den Anschlagflächen der Schallschutzelemente anliegen und sich so in dieser Stellung verspreizen, ist jedoch ohnehin die Gefahr eines nachfolgenden erneuten Verdrehens der Riegelköpfe vor dem eigentlichen Spannvorgang weitgehend gemindert.

Aus der US-A-3 124 222 ist eine Wandkonstruktion mit ähnlichen Befestigungselementen wie im Falle der US-A-3 431 692 bekannt, wobei jedoch die dortigen Stirnflächen derart schräg ausgebildet sind, daß sie in der Riegelstellung der Riegelarme in wesentlichen parallel zum Spalt und damit zu den Anschlagflächen liegen. In der Praxis ist jedoch durch Toleranzschwankungen des Abstandes zwischen den einander gegenüberliegenden Anschlagflächen benachbarter Schallschutzelemente eine solche flächige Anlage nicht erreichbar, so daß auch dieser Riegelkopf mit einer der beiden Begrenzungskanten der Stirnfläche anliegt. Eine konvex gekrümmte Ausbildung der Stirnfläche zur Erzielung einer gleitenden Einschleifbewegung in die Riegelstellung ist auch hier nicht vorgesehen.

Aus der GB-A-494 240 ist es andererseits bereits bekannt, ein zwischen einer Riegelstellung und einer Freigabestellung verdrehbares Riegelelement drehfest an einem an seiner Außenseite mit einem Querschlitz zur Drehung des Riegelelementes und zur Anzeige von dessen Drehstellung versehenen Bolzen zu befestigen, dessen Gewindeabschnitt von einer Spannmutter untergriffen wird. Bei diesem bekannten Riegelelement handelt es sich jedoch nicht um einen in einem Spalt verkeilbaren Riegelkopf, sondern um eine Riegellasche, die neben dem Rand des Schenkels eines U-Profils gelagert ist und hinter diesen Schenkel gedreht sowie wieder zurückgedreht werden kann. Da es im Falle der GB-A-494 240 darum geht, eine vorgehängte Wand durch Federklammern an einer Stützkonstruktion aus Profilen zu befestigen, ergeben sich gänzlich andere Problemstellungen.

Anspruch 2 hat eine besonders bevorzugte Ausbildung der Stirnfläche zum Inhalt, mit der erreicht wird, daß auch bei stark unterschiedlichen Abständen zwischen den Anschlagflächen der Riegelarm stets möglichst ähnliche Anschlagbedingungen erzeugt werden, so daß auch große Toleranzschwankungen zwischen den Schallschutzelementen nicht zur Beeinträchtigung einer einwandfreien Befestigung führen.

Weitere Einzelheiten, Merkmale und Vorteile der Erfindung ergeben sich aus der nachfolgenden Beschreibung von Ausführungsbeispielen anhand der Zeichnung. Es zeigt

Fig. 1 einen Teil-Horizontalschnitt durch eine erfindungsgemäße Schallschutzwand im Bereich einer zwei Schallschutzelemente verbindenden Abdeckschiene,

Fig. 2 eine Fig. 1 entsprechende Ansicht einer Wandecke mit abgewandelter Form der Abdeckschiene und der Befestigungselemente,

Fig. 3 einen Fig. 2 entsprechenden Schnitt im Bereich einer abgewandelten Ausführungsform einer Wandecke,

Fig. 4 eine Teil-Ansicht der Schallschutzwand gemäß Fig. 3 aus Richtung des Pfeiles IV in Fig. 3,

Fig. 5 eine Seitenansicht des bei der Schallschutzwand gemäß den Fig. 3 und 4 verwendeten Befestigungselementes mit abgenommener Spannmutter,

Fig. 6 eine Stirnansicht des Befestigungselementes gemäß Fig. 5,

Fig. 7 eine Draufsicht auf das Befestigungselement gemäß Fig. 5 und 6 und

Fig. 8 in vergrößerter schaubildlicher Darstellung das äußere Ende eines Riegelarmes einer abgewandelten Ausführungsform des Befestigungselementes gemäß den Fig. 5 bis 7.

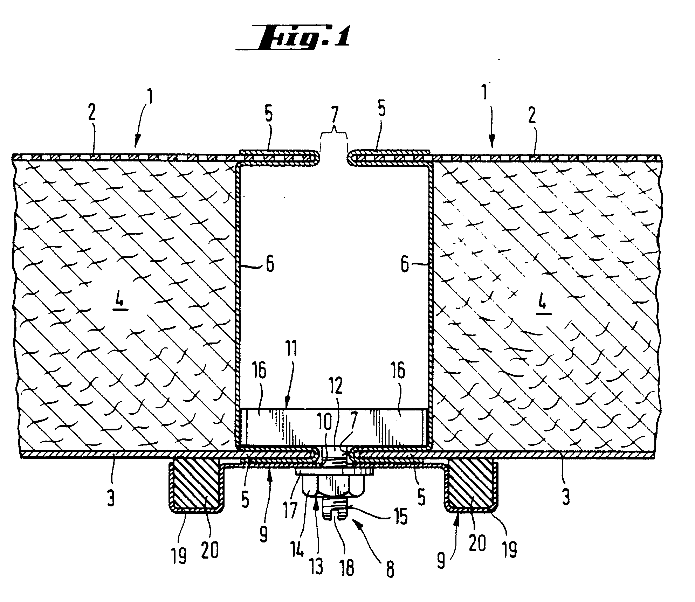

In Fig. 1 ist im Schnitt ein Teil einer Schallschutzwand veranschaulicht, die aus einzelnen, kastenförmigen Schallschutzelementen 1 aufgebaut ist, die untereinander gleiche Ausbildung besitzen können. Im Beispielsfalle möge es sich um einen Wandabschnitt einer Schallschutzkapsel handeln, wobei die Innenfläche der Schallschutzwand bzw. der einzelnen Schallschutzelemente 1 durch ein Lochblech 2 gebildet ist, während die Außenfläche 3 durch eine übliche Blechverkleidung gebildet sein möge. Zwischen der Innenfläche 2 und der die Sichtseite bildenden Außenfläche 3 ist Schallschluckmaterial 4 einer üblichen Konsistenz angeordnet.

Die kastenförmigen Schallschutzelemente 1 weisen parallel zur Wandebene liegende Längsstege 5 auf, welche die Innenfläche 2 bzw. die Außenfläche 3 über die Füllung 4 begrenzende Seitenwände 6 hinaus verlängern. Die Längsstege 5 benachbarter Schallschutzelemente 1 fluchten in der veranschaulichten montierten Stellung der Schallschutzwand und lassen einen Spalt 7 frei. Im Beispielsfalle erfolgt an den beiden sichtseitigen Längsstegen 5 eine gegenseitige Befestigung der benachbarten Schallschutzelemente 1 über eine Reihe den Spalt 7 an der Sichtseite durchgreifender Befestigungselemente 8, die gleichzeitig zur Montage einer den Verbindungsbereich sichtseitig abdeckenden Abdeckschiene 9 dienen.

Die Abdeckschiene 9 weist in ihrem den Spalt 7 überdeckenden Bereich eine Reihe von Durchtrittsöffnungen 10 auf, die wenigstens etwa die Breite des Spaltes 7 besitzen. Die Anzahl der Durchtrittsöffnungen 10 und damit der im Bereich jeder Stoßfuge eingesetzten Befestigungselemente 8 hängt von den Erfordernissen des Einzelfalles und der Länge der Stoßfuge ab, wobei natürlich in einem hier nicht näher betrachteten Extremfall auch ein einzelnes Befestigungselement 8 ausreichend sein kann.

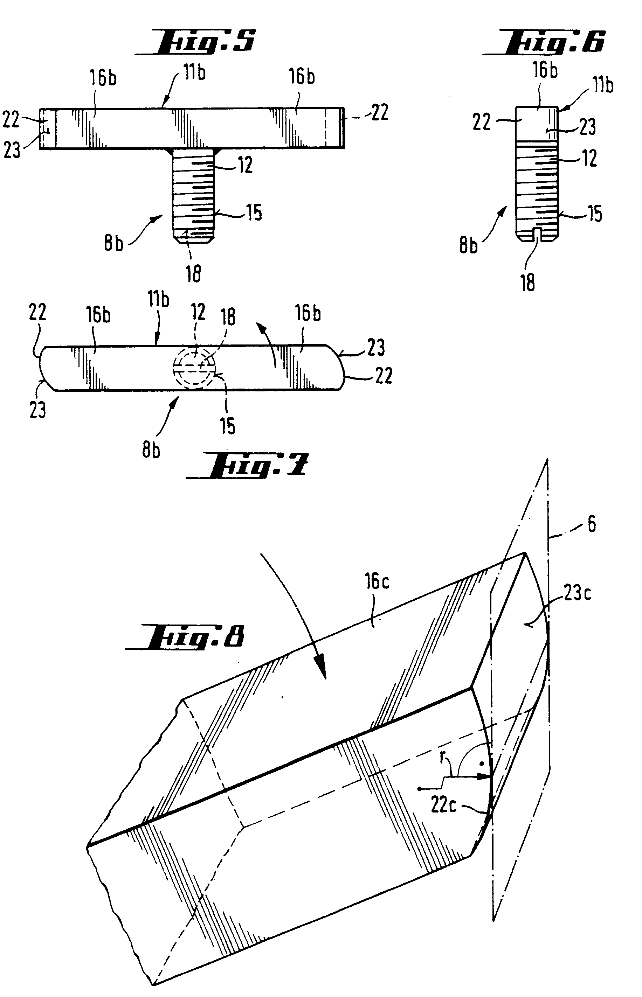

Jedes Befestigungselement 8 weist einen Riegelkopf 11, einen Bolzen 12 und eine Spanneinrichtung 13 auf, die im Beispielsfalle durch eine Spannmutter 14 gebildet ist, welche auf einen Gewindeabschnitt 15 des Bolzens 12 aufgeschraubt ist. Der Durchmesser des Bolzens 12, der runden Querschnitt besitzt, ist selbstverständlich so gewählt, daß der Bolzen 12 die zugehörige Durchtrittsöffnung 10 der Abdeckschiene 9 sowie den Spalt 7 zwischen den Längsstegen 5 durchsetzen kann. Der Riegelkopf 11, der weiter unten im Zusammenhang mit den Fig. 5 bis 8 noch näher erläutert wird, weist im Beispielsfalle gemäß Fig. 1 zwei Riegelarme 16 auf, deren Breite ebenfalls so gering ist, daß die Riegelarme 16 in der mit der Längserstreckung des Spaltes 7 fluchtenden Stellung durch den Spalt 7 hindurchtreten können, während sie nach Drehung von weniger als 90° in der aus Fig. 1 ersichtlichen Stellung an der Rückseite der zugehörigen Längsstege 5 zu beiden Seiten des Spaltes 7 anliegen. Die Spannmutter 14 weist einen Druckkragen 17 auf, der die Ränder der Durchtrittsöffnung 10 der Abdeckschiene 9 und der im Spalt 7 benachbarten Längsstege 5 übergreift. Beim Anziehen der Spannmutter 14 werden somit zusammen mit den inneren Bereichen der Abdeckschiene 9 die Längsstege 5 zwischen den Riegelarmen 16 und dem Druckkragen 17 der Spannmutter 14 verspannt und so die beiden Längsstege 5 eingeklemmt.

An der äußeren Stirnseite des Bolzens 12 ist ein Schlitz 18 eingearbeitet, der im Beispielsfalle in einem rechten Winkel zur Längserstreckung der Riegelarme 16 liegt und somit als Anzeigeelement für deren Stellung hinter den Längsstegen 5 dient. Anhand des Schlitzes 18, der gemäß der entsprechenden Norm als Schraubenschlitz ausgebildet sein kann, kann mit einem Schraubenzieher der Riegelkopf 11 in die gewünschte Riegelstellung gemäß Fig. 1 gedreht werden, wonach die Spannmutter 14 gegebenenfalls mit der anderen Hand, unter Aufrechterhaltung der Einstellung des Schlitzes 18, mittels eines Schraubenschlüssels angezogen werden kann.

Die Abdeckschiene 9 weist in einem äußeren seitlichen Bereich zu beiden Seiten der Reihe der Befestigungselemente 8 Abkröpfungen 19 auf, die im Beispielsfalle symmetrisch zu einer die Durchtrittsöffnungen 10 enthaltenden Symmetrieebene der Abdeckschiene 9 angeordnet sind und als Befestigungsmittel für akustisch wirksame Beläge 20 dienen. Beim Festziehen der Spannmutter 14 und dem damit einhergehenden Andrücken des Mittelbereiches der Abdeckschiene 9 gegen die Längsstege 5 werden die Beläge 20 gegen die Außenfläche 3 der benachbarten Schallschutzelemente 1 gedrückt. Das Material der Beläge 20 kann so gewählt werden, daß darüber hinaus auch der Reibungskoeffizient zwischen den Belägen 20 und dem Blech an der Außenfläche 3 der Schallschutzelemente 1 höher ist als der Reibungskoeffizient zwischen dem Material der Abdeckschiene 9, die aus verzinktem Stahlblech bestehen möge, und dem Material der Außenfläche 3. Hierdurch ergibt sich eine zusätzliche Haltewirkung.

Zur Montage können die Befestigungselemente 8 — gegebenenfalls zusammen mit den als Materialstreifen ausgebildeten Belägen 20 — an der Abdeckschiene 9 lose vormontiert werden, wozu der Bolzen 12 von der in Fig. 1 oberen Seite her durch die zugehörige Durchtrittsöffnung 10 gesteckt und sodann die Spannmutter 14 lose aufgesetzt wird. Danach werden die Riegelköpfe 11 der an der zu montierenden Abdeckschiene 9 lose angeordneten Befestigungselemente 8 in fluchtende Ausrichtung mit dem Spalt 7 gedreht und so durch den Spalt 7 hindurchgeschoben. Anschließend können die Riegelköpfe 11 nacheinander in die in Fig. 1 veranschaulichte Riegelstellung um weniger als 90° gedreht und die zugehörige Spannmutter 14 angezogen werden. Bei Bedarf können die Durchtrittsöffnungen 10 der Abdeckschiene 9 auch als in Spaltrichtung mit dem Spalt 7 fluchtende Langlöcher ausgebildet werden, durch welche hindurch der Riegelkopf 11 in seiner mit dem Spalt 7 fluchtenden Ausrichtung ebenfalls durchtreten kann. hierdurch kann der Arbeitsschritt der Vormontage der einzelnen Befestigungselemente 8 an der Abdeckschiene entfallen, vielmehr können die Befestigungselemente 8 einzeln nacheinander aufgenommen und durch die langlochartigen Durchtrittsöffnungen 10 der an den Spalt 7 angelegten Abdeckschiene 9 hindurch angebracht und montiert werden. Dabei spielt keine Rolle, daß die Lage der Befestigungselemente 8 in Richtung der Längserstreckung der langlochartigen Durchtrittsöffnungen 10 nicht exakt festgelegt ist, da die Einklemmung der Längsstege 5 praktisch an jeder beliebigen Stelle ihrer Längserstreckung erfolgen kann. In jedem Falle können die Abkröpfungen 19 bei der Herstellung der Abdeckschiene 9 so bemessen werden, daß sie die Beläge 20 beispielsweise in Form von Materialstreifen aus Vierkantgummi durch sanfte Einklemmung halten, so daß diese bei der Montage keinerlei Schwierigkeiten bereiten.

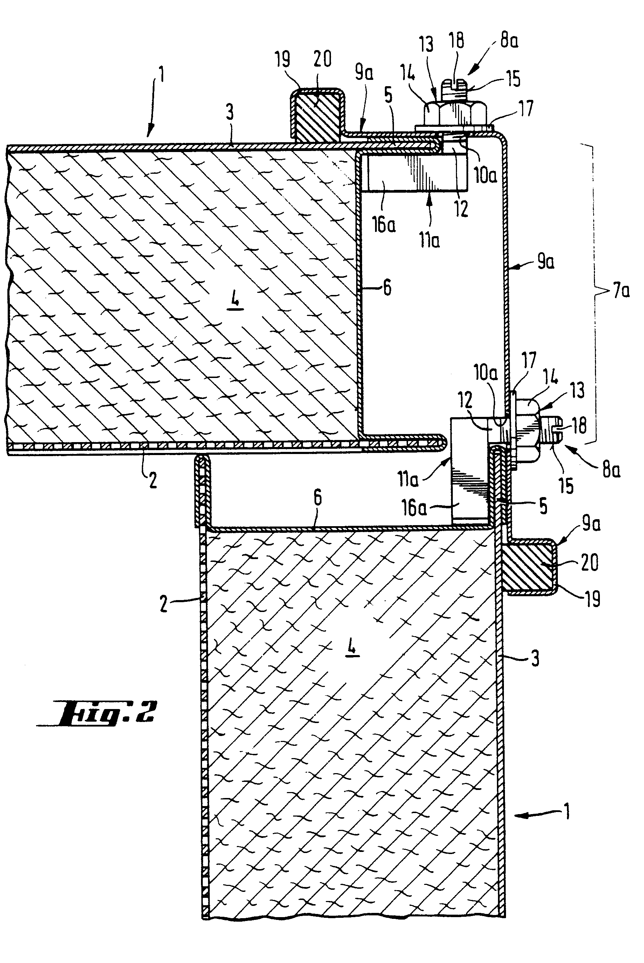

Bei der Wandecke gemäß Fig. 2 ist in einer Fig. 1 entsprechenden Darstellung eine Anpassung dieses Befestigungsprinzips auf eine Wandecke veranschaulicht, wobei identische Bauteile mit gleichen Bezugszeichen und einander nur funktionell entsprechende Bauteile mit Index « a » versehen sind.

Der wesentliche Unterschied bei der Ausführungsform gemäß Fig. 2 besteht darin, daß die Längsstege 5 erheblichen gegenseitigen Abstand voneinander besitzen, so daß sich ein entsprechend großer Spalt 7a ergibt, der zudem nicht in der Ebene einer der Außenflächen 3 liegt. Zur Berücksichtigung dieser besonderen Umstände ist die Abdeckschiene 9a gemäß Fig. 2 gebogen ausgebildet und zweist zwei Reihen von Durchtrittsöffnungen 10a in unmittelbarer Nachbarschaft der einander zugewandten Enden der Längsstege 5a auf. Entsprechend sind zwei Reihen von Befestigungselementen 8a vorgesehen, die Riegelköpfe 11a mit nur einem einzelnen Riegelarm 16a besitzen. Da die Durchtrittsöffnungen 10a parallel zur Ebene des benachbarten Längssteges 5 liegen, ergeben sich dieselben Montage- und Klemmverhältnisse bezüglich des einzelnen Riegelarmes 16a und des zugehörigen Längssteges 5 wie im Falle der Ausführungsform gemäß Fig. 1, wobei lediglich jeder einzelne Riegelarm 16a mit eigenem Bolzen 12 und eigener Spannmutter 14 in der Nachbarschaft des zugehörigen Längssteges 5 angeordnet ist und keine Zusammenfassung zu einem doppelarmigen Riegelkopf 11 für eng benachbarte Längsstege 5 mehr möglich ist.

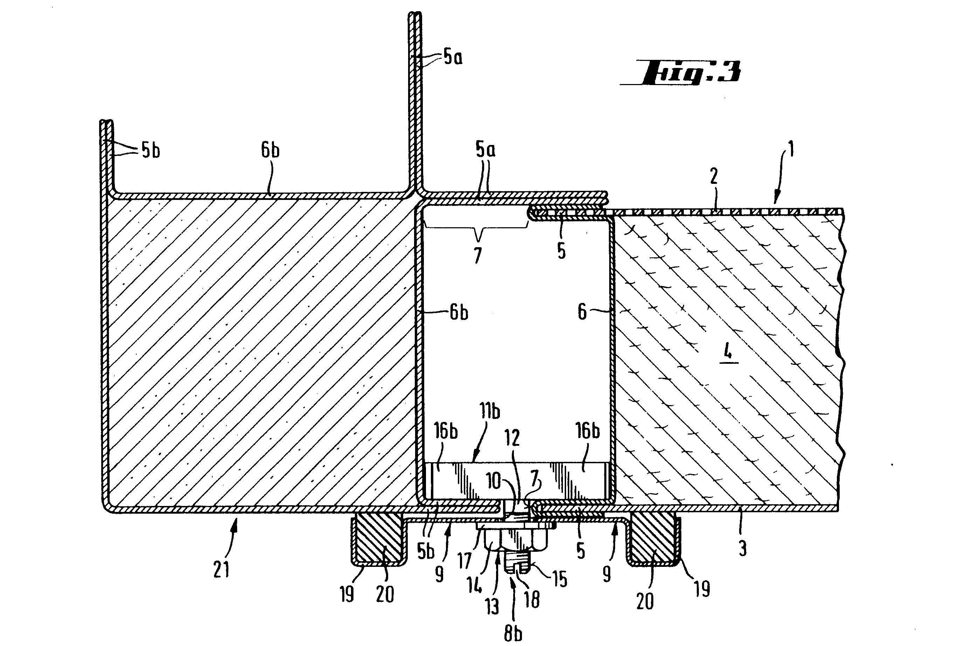

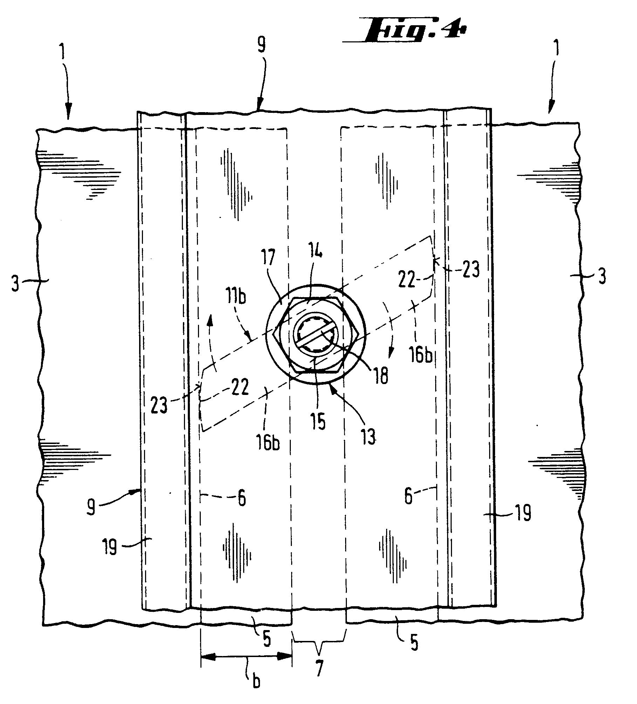

Wie aus der Darstellung in Fig. 4 näher ersichtlich ist, weisen die dortigen Riegelarme 16b ebenso wie die Riegelarme 16 und 16a eine solche Länge auf, welche größer ist als die in der Wandebene gemessene Breite b des zugeordneten Längssteges, die in Fig. 4 veranschaulicht ist. Dadurch wird erreicht, daß der Riegelkopf 11, 11a, 11b nicht voll drehen kann, sondern nach einer gewissen Drehung um beispielsweise 60° an der benachbarten Seitenwand 6 des Schallschutzelementes 1 anschlägt. Der Schlitz 18 des Bolzens 12 dient dabei als Anzeigeelement für die Stellung des Riegelkopfes 11b, jedoch ist nicht nötig, diese Stellung etwa mittels eines Schraubenziehers zu sichern. Somit kann ganz einfach etwa mittels eines drehmomentbegrenzten Schnellschraubers an der Spannmutter 14 angesetzt und diese gedreht werden, wobei über Reibung der Riegelkopf 11, 11a, 11b mitgenommen wird, bis die formschlüssige Begrenzung des Verdrehwinkels an der Seitenwand 6 erfolgt, wonach die Spannmutter 14 in automatisch richtiger Lage des Riegelkopfes 11, 11a, 11b weiter bis zum vorgesehenen Drehmoment maschinell angezogen werden kann. Es liegt auf der Hand, daß sich hierdurch eine ganz erhebliche Vereinfachung und insbesondere Beschleunigung der Montage ergibt, wobei durch die Drehmomentbegrenzung am Schnellschrauber zugleich Überbeanspruchungen des Materials sicher vermieden werden. Es sei darauf hingewiesen, daß auch bei der Ausführungsform gemäß den Fig. 3 und 4 ebenso wie bei den übrigen Ausführungsformen identische Teile mit gleichen Bezugszeichen bezeichnet sind, so daß sich eine Erläuterung dieser Teile erübrigt.

In Fig. 3 ist im übrigen eine abgewandelte Ausführungsform einer Wandecke veranschaulicht, welche eine besondere Ausbildung der Abdeckschiene wie im Falle der Abdeckschiene 9a gemäß Fig. 2 und eine besondere Ausbildung der Befestigungselemente mit einseitigen Riegelarmen wie im Falle der Befestigungselemente 8a gemäß Fig. 2 vermeidet. Hierzu ist bei der Ausführungsform gemäß Fig. 3 eine Eckstütze 21 vorgesehen, die eine Seitenwand 6b in derjenigen Stellung besitzt, welche die Seitenwand 6 eines anstelle der Eckstütze 21 benachbarten Schallschutzelementes 1 besitzen würde, wobei an der Sichtseite auch ein entsprechender Längssteg 5b vorgesehen ist, der in seinen Abmessungen dem Längssteg 5 eines an dieser Stelle angeordneten Schallschutzelementes 1 entspricht. Für das Befestigungselement 8b gemäß Fig. 3 an der Sichtseite der Schallschutzwand ergeben sich somit dieselben Einbauverhältnisse, als wenn anstelle der Eckstütze 21 ein normales Schallschutzelement 1 benachbart wäre. An der Innenseite der Schallschutzwand, also im Bereich der Innenfläche 2 des Schallschutzelementes 1, ist die Eckstütze 21 jedoch mit einem Steg 5a ausgebildet, der den dortigen Spalt 7 voll überdeckt und so eine Abdeckung für diesen bildet. Wie die entsprechenden, in Fig. 3 eingezeichneten Stege 5a und 5b der Eckstütze 21 veranschaulichen, die mit der Ebene der soeben erläuterten Längsstege 5a und 5b einen Winkel von 90° einschließen, kann dort entsprechend der Anschluß eines weiteren Schallschutzelementes 1 zur Bildung einer Schallschutzwand erfolgen, die mit der in Fig. 3 horizontal liegenden Schallschutzwand einen rechten Winkel einschließt und über die Eckstütze 21 verbunden ist. Wie weiterhin ohne weiteres ersichtlich ist, wird anstelle einer Eckstütze 21 eine in die Schallschutzwand integrierte, jedoch nicht näher dargestellte Stütze ganz einfach dadurch geschaffen, daß die jeweiligen Stege 5a und 5b jeder Stütze miteinander fluchten, also die entsprechende Montage benachbarter Schallschutzelemente 1 nicht im Winkel von 90°, sondern fluchtend im Winkel von 180° erfolgt. Auf diese Weise lassen sich äußerst großflächige Schallschutzwände mit fluchtend eingelagerten Stützen schaffen, was insbesondere für Deckenwände von Bedeutung ist, die zum Durchhängen neigen.

Wie insbesondere die Fig. 5 bis 7 veranschaulichen, ist jeder Riegelkopf, im Beispielsfalle der Riegelkopf 11b, mit zwei symmetrisch zum Bolzen 12 liegenden Riegelarmen 16b mit an den Enden der Riegelarmen 16b vorgesehenen Schrägen 22 versehen, wobei mit 23 bezeichnete ballige Stirnflächen der Schrägen in der insbesondere aus Fig. 4 ersichtlichen Weise in der Riegel- oder Klemmstellung des Riegelkopfes 11b annähernd parallel zur Längserstreckung der Abdeckschiene 9 liegen. Hierdurch ergibt sich eine unterschiedliche Schrägungsrichtung, je nachdem, ob der Gewindeabschnitt 15 des Bolzens 12 Rechtsgewinde oder Linksgewinde aufweist, wobei im Falle der hier erläuterten Ausführungsformen jeweils von einem Rechtsgewinde ausgegangen wird, bei dem der Riegelkopf 11b durch Anziehen der Spannmutter 14 in die Stellung gemäß Fig. 4 gelangt. Durch die schräge Ausbildung der äußeren Enden der Riegelarme 16b mit entsprechend abgeschrägten konvex gekrümmten Stirnflächen 23 schlagen die äußeren Enden der Riegelarme 16b bei Beaufschlagung der Spannmutter 14 durch den Schnellschrauber ähnlich Klemmpratzen an den Seitenwänden 6 bzw. 6b an, so daß auch bei einem harten Schlag Beschädigungen vermieden sind. Darüber hinaus tritt eine gewisse Einschleif- und Spreizwirkung auf und können sich die äußeren Enden der Riegelarme 16b an den Wänden 6 oder 6b etwas verkeilen, so daß sich eine zusätliche Lagesicherung und eine sta-

9     EP 0 011 239 B2     10

bilisierende Verspannung der einzelnen Schallschutzelemente 1 ergibt.

Besonders ausgeprägt können diese letztgenannten Wirkungen mit einer Ausführungsform des Riegelarmes 16c gemäß Fig. 8 erreicht werden, dessen Schräge 22c eine evolventenförmige Stirnfläche 23c aufweist, die auch unter ungünstigen Einbaubedingungen beim Andrükken an die Wand 6 gewissermaßen in ihre Endstellung einschleift und dort kraftschlüssig unter linienförmiger Flächenberührung gehalten ist. Die konvex gekrümmte Stirnfläche 23c ist dabei nach Art einer Evolvente derart ausgebildet, daß sich unabhängig vom momentanen Verdrehwinkel des Riegelarmes 16c in Abhängigkeit vom jeweiligen genauen Abstand der benachbarten Seitenwände 6 Angriffsverhältnisse ergeben, bei denen der Krümmungsradius r der Stirnfläche 23c in jedem Falle wenigstens annähernd senkrecht auf der Seitenwand 6 steht. Maßschwankungen zwischen den Abständen benachbarter Seitenwände 6, etwa bei im Zuge der Montage geringfügig schwankenden Breiten des Spaltes 7, lassen sich so besonders gut ausgleichen. In jedem Falle besitzt jeder Riegelarm 16, 16a, 16b bzw. 16c eine solche Länge, daß bei sehr eng ausfallendem Spalt 7 ein Verdrehwinkel aus der mit dem Spalt 7 fluchtenden Stellung von beispielsweise wenigstens etwa 30° erreicht wird, während bei breitem Spalt 7 bzw. innerhalb vorgegebener Toleranzen extrem weit auseinanderstehenden Seitenwänden 6 fast ein Verdrehwinkel von 90° erreicht werden kann, ohne daß dies die Funktionsfähigkeit des jeweiligen Befestigungselementes beeinträchtigen würde. Entsprechend können auch Unterschiede im Abstand benachbarter Seitenwände 6 bei Auswechselung von einzelnen Schallschutzelementen 1 oder bei einer erneuten Montage der Schallschutzwand etwa an anderer Stelle auftreten, ohne Probleme zu ergeben.

**Patentansprüche**

1. Schallschutzwand mit einer Mehrzahl nebeneinander angeordneter, kastenförmiger Wandelemente (1), die zumindest an ihrer äußeren Sichtseite (3) parallel zur Wandebene liegende Längsstege (5, 5b) für die Befestigung von den Spalt (7, 7a) zwischen benachbarten Schallschutzelementen an der Sichtseite überbrückenden Abdeckschienen (9, 9a) aufweisen, wobei die Abdeckschienen mittels jede Abdeckschiene durchgreifender Befestigungselemente (8, 8a, 8b) an den Längsstegen befestigt sind, dadurch gekennzeichnet, daß jedes Befestigungselement (8 ; 8a ; 8b) mit einem im Spalt (7 ; 7a) drehbaren Bolzen (12) den Spalt (7 ; 7a) zwischen benachbarten Längsstegen (5 ; 5b) durchgreift und mit einem daran starr befestigten, durch den Spalt (7 ; 7a) führbaren inneren Riegelkopf (11 ; 11a ; 11b), der wenigstens einen Riegelarm (16 ; 16a ; 16b ; 16c) mit gegenüber der Breite (b) des zugeordneten Längsstegs (5 ; 5b) größerer Länge aufweist, den zugeordneten Längssteg (5 ; 5b) hintergreift, daß an der Sichtseite eine von außen her zugängliche Spanneinrichtung (13) an jedem Befestigungselement (8 ; 8a ; 8b) vorgesehen ist, mit welcher der Riegelkopf (11 ; 11a ; 11b) in Richtung auf die Abdeckschiene (9 ; 9a) spannbar ist, daß die Spanneinrichtung (13) jedes Befestigungselements (8 ; 8a ; 8b) als auf einem Gewindeabschnitt (15) des Bolzens (12) angeordnete Spannmutter (14) ausgebildet ist, daß das Außenende jedes Riegelarmes (16 ; 16a ; 16b ; 16c) mit einer Schräge (22 ; 22c) versehen ist, die eine konvex gekrümmte Stirnfläche (23 ; 23c) aufweist und in der Klemmstellung des Riegelkopfes (11 ; 11a ; 11b) annähernd parallel zur Längserstreckung der Abdeckschiene (9 ; 9a) liegt, und daß an der äußeren Stirnseite des Bolzens (12) ein zum Verdrehen und Anklemmen des Riegelkopfes sowie als Anzeigeelement für dessen Stellung dienender Schlitz (18) eingearbeitet ist.

2. Schallschutzwand nach Anspruch 1, dadurch gekennzeichneter, daß die Stirnfläche (23c) wenigstens annähernd nach Art einer Evolvente ausgebildet ist, derart, daß der örtliche Krümmungsradius (r) der Stirnfläche (23c) bei jedem in Frage kommenden Verdrehwinkel des Bolzens (12) etwa senkrecht auf einer senkrecht zur Verdrehebene des Riegelarmes (16c) innerhalb von dessen Schwenkradius liegenden Seitenwand (6 ; 6b) steht.

**Claims**

1. A sound insulating wall made up of a number of box-like wall elements placed (1) side by side, that at least on their outer uncovered side (3) have lengthways ribs (5, 5b) for the fixing in position of cover rails (9, 9a) bridging over the gap (7, 7a) between each sound insulating element and the one next thereto, said ribs being parallel to the plane of the wall, and the cover rails are fixed in position on the lengthways ribs by way of fixing elements (8, 8a, 8b), said fixing elements being fitted through each cover rail, characterized in that each fixing element (8, 8a, 8b) has a bolt (12) fitted through the gap (7, 7a) between one rib (5, 5b) and the next one thereto, each bolt being able to be turned in the gap (7, 7a), each said fixing element further having an inner bolt head (11, 11a, 11b) rigidly fixed on the same, said bolt head being able to be slipped through the gap (7, 7a) and said bolt head having at least one bolt arm (16, 16a, 16b) that is longer than the breadth (b) of the lengthways rib (5, 5b) next thereto, said bolt arm gripping round to the back of said lengthways rib (5, 5b) next thereto, in that on the open side of there is a tightening unit (13) on each fixing element (8, 8a, 8b), said tightening unit being able to be worked from the outside and being able to be used for tightening the bolt head (11, 11a, 11b) towards the cover rail (9, 9a), in that the tightening unit (13) of each fixing element (8, 8a, 8b) is in the form of a tightening nut (14) placed on the threaded part (15) of the bolt (12), in that the outer end of each bolt arm (16, 16a, 16b, 16c) has a

6

sloping part (22, 22c) that has an outwardly curved end face (23, 23c) and in the gripping position of the bolt head (11, 11a, 11b) is roughly parallel to the length direction of the cover rail (9, 9a), and that on the outer end face of the bolt (12) there is cut in a slot (18) for turning and clamping the bolt head as well as for serving as an indicating element for its position.

2. The sound insulating wall as claimed in claim 1, characterized in that the end face (23c) is formed at least roughly as an involute curve so that the local radius of curvature (r) of the end face (23c) at every angle of twist coming into question of the bolt (12) is generally normal to a side wall (6, 6b), said side wall being normal to the plane of twist of the bolt arm (16c) within its angle of turning.

**Revendications**

1. Paroi de protection acoustique comprenant une pluralité d'éléments de paroi (1) en forme de caisson, juxtaposés, qui présentent, au moins sur leur côté visible extérieur (3), des talons longitudinaux (5, 5b) situés parallèlement au plan de la paroi, pour la fixation de barres de recouvrement (9, 9a) fermant la fente (7, 7a) entre éléments de protection acoustique voisins au droit du côté visible, les barres de recouvrement étant fixées aux talons longitudinaux au moyen d'éléments de fixation (8, 8a, 8b) qui traversent chaque barre de recouvrement, caractérisée en ce que chaque élément de fixation (8 ; 8a ; 8b) traverse la fente (7 ; 7a) entre talons longitudinaux (5 ; 5b) voisins par une vis (12) qu'on peut faire tourner dans la fente (7 ; 7a), et est engagé derrière le talon longitudinal correspondant (5 ; 5b) par une tête de verrouillage intérieure (11 ; 11a ; 11b) fixée rigidement à cette vis, tête qui peut être engagée à travers la fente (7 ; 7a), et qui présente au moins un bras de verrouillage (16 ; 16a ; 16b ; 16c) d'une longueur supérieure à la largeur (b) du talon longitudinal (5 ; 5b) correspondant, en ce que, sur le côté visible, il est prévu sur chaque élément de fixation (8 ; 8a ; 8b) un dispositif de serrage (13) accessible de l'extérieur, au moyen duquel la tête de verrouillage (11 ; 11a ; 11b) peut être serrée en direction de la barre de recouvrement (9 ; 9a), en ce que le dispositif de serrage (13) de chaque élément de fixation (8 ; 8a ; 8b) est constitué par un écrou de serrage (14) monté sur un segment fileté (15) de la vis (12), en ce que l'extrémité extérieure de chaque bras de verrouillage (16 ; 16a ; 16b ; 16c) est munie d'un biseau (22 ; 22c) présentant une surface frontale (23 ; 23c) de courbure convexe, et est approximativement parallèle à l'extension longitudinale de la barre de recouvrement (9 ; 9a) dans la position de blocage de la tête de verrouillage (11 ; 11a ; 11b) et en ce que le côté frontal extérieur de la vis (12) est pourvu d'une fente (18) servant à la rotation et au blocage de la tête de verrouillage, ainsi que comme élément indicateur de la position de cette tête.

2. Paroi de protection acoustique suivant la revendication 1, caractérisée en ce que la surface frontale (23c) est configurée au moins approximativement à la façon d'une développante, de manière que, pour chaque angle de rotation de la vis (12) qui peut être envisagé, le rayon de courbure local (r) de la surface frontale (23c) soit à peu près perpendiculaire à une paroi latérale (6 ; 6b) qui s'étend perpendiculairement au plan de rotation du bras de verrouillage (16c) à l'intérieur de son rayon de rotation.

# Fig. 1

**Fig. 2**

Fig.3

Fig. 4

Fig:5

Fig:6

Fig:7

Fig:8